# EUROPÄISCHE PATENTSCHRIFT

(11) **EP 2 878 971 B1**
(45) Veröffentlichungstag und Bekanntmachung des Hinweises auf die Patenterteilung: **29.12.2021**
(21) Anmeldenummer: 14003812.6
(22) Anmeldetag: 12.11.2014
(51) Int. Cl.: G01S 13/92

(54) **Verfahren zur Geschwindigkeitsmessung eines sich auf einer Straße bewegenden Kraftfahrzeuges**
Method for measuring the speed of a motor vehicle moving along a road
Procédé de mesure de la vitesse d'un véhicule se déplaçant sur une route

(30) Priorität: 27.11.2013 DE 102013019801
(43) Veröffentlichungstag der Anmeldung: 03.06.2015
(73) Patentinhaber: Jenoptik Robot GmbH, 40789 Monheim (DE)
(72) Erfinder: Ortner, Marko, 40789 Monheim (DE); Michaelsen, Marcos, 40764 Langenfeld (DE); Dohmann, Bernhard, 40764 Langenfeld (DE)
(74) Vertreter: Waldauf, Alexander

(56) Entgegenhaltungen:
- EP-A1- 2 650 696
- EP-A2- 0 286 910
- DE-A1- 3 908 785
- DE-A1-102010 010 656
- US-A- 6 160 494
- US-A1- 2004 174 294
- US-A1- 2011 187 580
- US-A1- 2012 188 115
- Robert Watson-Watt: "The Pulse of Radar: The Autobiography of Sir Robert Watson-Watt" In: "The Pulse of Radar: The Autobiography of Sir Robert Watson-Watt", 1 January 1959 (1959-01-01), The Dial Press, New York, XP055355161, pages 228-231, * page 228 - page 23 *

## Beschreibung

Die vorliegende Erfindung bezieht sich auf ein Verfahren zur Geschwindigkeitsmessung eines sich auf einer Straße bewegenden Kraftfahrzeuges gemäß den Merkmalen von Patentanspruch 1.

Insbesondere aus der Verkehrsmesstechnik sind Verfahren und entsprechende Vorrichtungen bekannt, mit denen mittels eines Lasersensors oder Radarsensors ein Arbeitsbereich einer Fahrbahn auf ein Ereignis hin, beispielsweise einen Geschwindigkeitsverstoß eines Kraftfahrzeuges, überwacht wird und im Falle des Eintretens des Ereignisses mittels einer Kamera eine Beweisaufnahme erstellt wird. Hierzu müssen die Position des Kraftfahrzeuges, das den Verstoß begangen hat, indem es beispielsweise mit seiner Fahrtgeschwindigkeit die zugelassene Grenzgeschwindigkeit überschritten hat und die Detektion des Verkehrsverstoßes in einer bestimmten Beziehung zueinander stehen. Daher wird das Kraftfahrzeug oftmals in einer festen Fotolinie mittels der Kamera erfasst.

Bei wellenstrahlbasierten Sensoren, beispielsweise Lasersensoren oder Radarsensoren, in der Verkehrsmesstechnik ist die Güte des Messergebnisses, insbesondere der Fahrtgeschwindigkeit, von der Anzahl der erfassten Messwerte abhängig. Eine geringe Anzahl von erfassten Messwerten liefert oftmals ein ungenaues Messergebnis, eine zu große Anzahl von Messwerten führt bei beschleunigtem oder verzögertem Fahrverhalten des Kraftfahrzeuges zu einem Abbruch der Messung. Aus dem Stand der Technik sind bereits einige Ausführungsformen bekannt, um die Güte der Messergebnisse zu verbessern.

Aus der EP 0 286 910 A2 ist eine Verkehrsüberwachungsvorrichtung zur photographischen Registrierung von Kraftfahrzeugen bekannt, in der ein erster Geschwindigkeitswert mittels Doppler-Radar auf einem relativ kurzen, einfahrtsseitigen Teil eines Messabschnittes gewonnen wird und zur Auslösung der Kamera dient. Ein zweiter Geschwindigkeitswert wird durch eine Vielzahl von Geschwindigkeitsmesswerten über den gesamten Messabschnitt gewonnen.

Die DE 10 2007 038 364 A1 offenbart ein Verfahren zur Geschwindigkeitsmessung von einem Kraftfahrzeug. Mittels eines Laserscanners werden bei jedem Scan Messwerte erfasst. Wenn das Kraftfahrzeug den Arbeitsbereich des Laserscanners durchfährt, wird eine Ortsänderung erfasst, um daraus die Geschwindigkeit zu ermitteln. Beim Erreichen einer Fotolinie werden zu schnell fahrende Kraftfahrzeuge fotografisch erfasst.

Die EP 2 650 696 A1 offenbart ein Verfahren zur Verkehrserfassung, bei dem bei der Durchfahrt eines Fahrzeuges durch einen schräg zur Fahrtrichtung gerichteten Radarstrahl Daten wie Richtung, Geschwindigkeit, Fahrzeuglänge, Sicherheitsabstand zum vorausfahrenden Fahrzeug und Fahrzeugart bzw. Fahrzeugklasse erhoben werden, sowie eine Vorrichtung zur Durchführung des Verfahrens.

Die US 2004/0174294 A1 offenbart ein System zur Messung einer Geschwindigkeit und/ oder einer Richtung eines Targets wie z.B. eines Kraftfahrzeuges.

Vor dem Beginn der eigentlichen Messung kann der Entfernungsbereich des Arbeitsbereiches dadurch beschränkt werden, dass er spezifisch für den Aufstellort auf Bereiche angelernt wird, in denen bewegte Objekte erwartet werden. Bei der Messung eines bewegten Objektes werden bei jedem Scan die Messwerte herangezogen, die einen rechten Winkel beschreiben. Hierzu kann der Arbeitsbereich des Laserscanners auf Winkelbereiche beschränkt werden, die Messwerte liefern, die einen rechten Winkel beschreiben.

Wellenstrahlbasierte Sensoren haben wie der in der DE 10 2007 038 364 A1 dargestellte Lasersensor beziehungsweise Laserscanner einen relativ großen Arbeitsbereich. Es ist zwar bekannt, den Arbeitsbereich auf bestimmte Bereiche zu beschränken, indem nicht die Messwerte des gesamten Erfassungswinkel und/oder die Messdaten des gesamten Entfernungsbereiches des Arbeitsbereiches erfasst werden, aber diese dann festgelegten Bereiche werden vollständig ausgelesen. Dies hat den gravierenden Nachteil, dass abhängig von der Geschwindigkeit des angemessenen Kraftfahrzeuges eine unterschiedliche Anzahl von Messwerten vorliegt. Bei schnell fahrenden Kraftfahrzeugen liegt eine geringe Anzahl von erfassten Messwerten vor, was dazu veranlasst, den Arbeitsbereich möglichst groß zu gestalten, da ansonsten ein ungenaues Messergebnis geliefert wird. Bei langsamen Objekten liegt eine große Anzahl von Messwerten vor, was dazu veranlasst, den Arbeitsbereich möglichst klein zu gestalten, da ansonsten bei beschleunigtem oder verzögertem Fahrverhalten es zu einem Abbruch der Messung kommen kann.

Somit kann die Größe des Arbeitsbereiches nur einen Kompromiss darstellen, wenn sowohl schnelle als auch langsam fahrende Kraftfahrzeuge prozesssicher erfasst werden sollen. Solche Situationen liegen insbesondere auf Autobahnen vor, auf denen beispielsweise bei einem Geschwindigkeitslimit von 80 km/h Lastkraftwagen angemessen werden sollen, die geringfügig die Geschwindigkeitsbegrenzung überschreiten, aber auch stark motorisierte Personenkraftwagen, die um ein vielfaches das Geschwindigkeitslimit überschreiten können.

Es ist daher Aufgabe der vorliegenden Erfindung, ein Verfahren zur Geschwindigkeitsmessung eines sich auf einer Straße bewegenden Kraftfahrzeuges zur Verfügung zu stellen, das sowohl für langsam als auch für schnell fahrende Kraftfahrzeuge eine hohe Prozesssicherheit zur Verfügung stellt. Diese Aufgabe wird durch ein Verfahren gemäß Anspruch 1 gelöst. Vorteilhafte Weiterbildungen werden durch die abhängigen Ansprüche näher definiert.

In einem Grundgedanken der Erfindung weist ein Verfahren zur Geschwindigkeitsmessung eines sich auf einer Fahrbahn bewegenden Kraftfahrzeuges folgende Schritte auf: Bereitstellen einer Sensoreinheit zum Aussenden einer Messstrahlung in einen einen maximalen Messbereich bestimmenden Arbeitsbereich und Empfangen einer an dem Kraftfahrzeug reflektierten Messstrahlung; Vorgeben einer Anzahl von ersten Messwerten; Erfassen von durch die empfangene Messstrahlung in einem ersten Teilmessbereich des Arbeitsbereiches erhaltenen ersten Messwerten; Abbrechen des Erfassens an ersten Messwerten, wenn die vorgegebene Anzahl an Messwerten erreicht wird; Ableiten einer Fahrtgeschwindigkeit des sich bewegenden Kraftfahrzeuges aus durch die empfangene Messstrahlung in dem ersten Teilmessbereich des Arbeitsbereiches erhaltenen ersten Messwerten; Vergleichen der Fahrtgeschwindigkeit mit einer Grenzgeschwindigkeit; Aufnehmen einer Beweisaufnahme mittels einer Kamera, falls die Fahrtgeschwindigkeit größer als die Grenzgeschwindigkeit ist;

Somit wird nicht der Messbereich vor der Messung festgelegt, sondern die Anzahl der Messwerte. Je nach der Fahrtgeschwindigkeit ergeben sich somit für den Messbereich verschiedene Größen. Insgesamt wird durch die erfindungsgemäße Lösung die Gerechtigkeit durch Gleichbehandlung von Geschwindigkeitsverstößen mit geringer Geschwindigkeit und hoher Geschwindigkeit gewährleistet. Bevorzugt erfolgt der Schritt des Aufnehmens einer Beweisaufnahme mit einer Kamera unmittelbar nach dem Vergleichen der Fahrtgeschwindigkeit mit Grenzgeschwindigkeit

In einer weiteren bevorzugten Ausführungsform erfolgt der Schritt des Aufnehmens dann, wenn sich das Kraftfahrzeug an einem vorgegebenen Fotolinie befindet. Es wird also bevorzugt eine derartige Anzahl an Messwerten vorgegeben, so dass die Messung für typische in dem Messbereich vorliegende Geschwindigkeiten abgeschlossen ist, bevor das Kraftfahrzeug den vorgegebenen Fotolinie erreicht.

Erfindungsgemäß wird eine Schätzgeschwindigkeit zu einem Zeitpunkt t_Schätz des sich bewegenden Kraftfahrzeuges aus durch die empfangene Messstrahlung in einem zweiten Teilmessbereich des Arbeitsbereiches erhaltenen zweiten Messwerten abgeleitet. Zeitlich nachfolgend wird dann das Erfassen von durch die empfangene Messstrahlung in einem ersten Teilmessbereich des Arbeitsbereiches erhaltenen ersten Messwerten zu einem Zeitpunkt t_Start begonnen, so dass das Abbrechen des Erfassens an ersten Messwerten vor der Fotolinie erfolgt. Somit wird durch eine Messung der Geschwindigkeit des Kraftfahrzeuges in einem einfahrtsseitigen Teil des Arbeitsbereiches (zweiter Teilmessbereich) der erste Teilmessbereich optimal an die Geschwindigkeit des Kraftfahrzeuges angepasst, also ein eher großer Messbereich für große Geschwindigkeiten und ein kleinerer Messbereich für kleine Geschwindigkeiten. Bevorzugt ist also der erste Teilmessbereich in einem ausfahrtsseitigen Teil und der zweite Teilmessbereich in einem einfahrtsseitigen Teil des Arbeitsbereiches angeordnet.

Unter einer Größe eines Messbereiches ist erfindungsgemäß eine Messlänge zu verstehen, die ein Kraftfahrzeug auf einer Fahrbahn abfährt. Somit werden aus dem maximalen Messbereich, also dem Arbeitsbereich, ein Teilmessbereich oder mehrere Teilmessbereiche herausgeschnitten, in denen die Messwerte zur Ableitung einer Geschwindigkeit herangezogen werden, während in den anderen Bereichen des Arbeitsbereiches die Messwerte verworfen werden. Bevorzugt ist somit der erste Teilmessbereich kleiner ausgebildet als der zweite Teilmessbereich.

Bevorzugt kann der Verfahrensschritt des Ableitens der ersten Geschwindigkeit und der Fahrtgeschwindigkeit aus der reflektierten Messstrahlung folgendermaßen erfolgen: Die Messstrahlung kann eine gepulste Laserstrahlung sein, die eine horizontale Scanebene mit einer konstanten Scanfrequenz und einer konstanten Pulsfrequenz mehrfach abscannt. Dazu kann der Lasersensor (Laserscanner) neben einer Fahrbahn in einem spitzen Winkel zur Fahrbahn aufgestellt sein. Während des Scannens trifft der Laserstrahl auf im Arbeitsbereich befindliche Kraftfahrzeuge und wird reflektiert. Der jeweilige Auftreffpunkt wird durch einen Messpunkt Pₙ beschrieben. Die Laufzeit des gepulsten Laserstrahls zum angemessenen Kraftfahrzeug und zurück korreliert mit der zurückgelegten Wegstrecke, woraus eine Entfernung eₙ des Messpunktes Pₙ vom am Fahrbahnrand positionierten Lasersensor (Laserscanner) abgeleitet und einem Zeitpunkt tₙ sowie einem momentanen Scanwinkel εₙ zugeordnet werden kann.

Mit den Messwerten für die momentane Entfernungen, und dem momentanen Winkel epsilon und dem Zeitpunkt tₙ können die Messpunkte Pₙ mit zeitlicher Zuordnung in einem Polarkoordinatensystem beschrieben werden, das durch den Standort und die Ausrichtung des Lasersensors (Laserscanners) bestimmt ist. Aus diesen Informationen kann nun eine Geschwindigkeit des Kraftfahrzeuges abgeleitet werden.

Alternativ kann die Messstrahlung auch eine Radarstrahlung sein, wobei die Sensoreinheit in diesem Ausführungsbeispiel einen Radarsensor umfasst, der eine Radarkeule aussendet. Die Radarstrahlung wird an sich innerhalb der Radarkeule befindlichen Kraftfahrzeugen reflektiert und aus den Reflexionssignalen beziehungsweise den abgeleiteten Doppler-Signalen werden in bekannter Weise für die jeweiligen Auftreffpunkte am Kraftfahrzeug Wertetripel abgeleitet, die jeweils aus einem Entfernungs- und einem Winkelwert, die gemeinsam die Position des Auftreffpunktes innerhalb der Radarkeule definieren, sowie einem Geschwindigkeitswert bestehen. Bevorzugt werden die erhaltenen Wertetripel, die jeweils durch einen Auftreffpunkt bewirkt werden, zu einem Track zusammengefasst und kontinuierlich auf Plausibilität geprüft (sogenanntes "Trackingverfahren"), indem die Messwerte mit errechneten Sollwerten verglichen werden. Die Sollwerte ergeben sich aus der Annahme, dass ein Kraftfahrzeug nur in begrenztem Maße Richtungsänderungen vornimmt und auch nur in bestimmten Grenzen beschleunigt beziehungsweise verzögert.

In einer weiteren bevorzugten Ausführungsform kann die Sensoreinheit einen ersten Sensor zum Ableiten der ersten Geschwindigkeit und einen zweiten Sensor zum Ableiten der Fahrtgeschwindigkeit umfassen. Dadurch wird erreicht, dass die erste Geschwindigkeit und die Fahrtgeschwindigkeit unabhängig voneinander gemessen werden können.

In einer weiteren bevorzugten Ausführungsform wird die Größe des ersten Teilmessbereiches mit einem ersten Korrekturfaktor angepasst. Da bei sehr schnellen Kraftfahrzeugen kaum starke fahrdynamische Änderungen zu erwarten sind, kann der erste Teilmessbereich durch einen zusätzlichen Faktor vergrößert werden, um Fahrzeuge mit hohen Geschwindigkeiten sicherer erfassen zu können. Auch in Abhängigkeit des Messortes kann ein zusätzlicher Korrekturfaktor in Bezug auf die Abhängigkeit der Schätzgeschwindigkeit nützlich sein, um a priori Wissen zu berücksichtigen, wie beispielsweise an Kreuzungen, die mit Ampeln versehen sind. Dabei kann bei langsamen Kraftfahrzeugen beispielsweise der erste Teilmessbereich vergrößert oder reduziert werden, da bei einem Umschlagen auf Rotlicht eine starke Verzögerung oder Beschleunigung möglich ist.

In einer weiteren bevorzugten Ausführungsform umfasst der Schritt des Ableitens einer Fahrtgeschwindigkeit folgende weitere Merkmale: Definieren eines Abbruchkriteriums des Ableitens einer Fahrtgeschwindigkeit wenn eine Streuung der ersten Messwerte oberhalb eines vorgegebenen Grenzwertes liegt; Statistisches Auswerten etwaiger Abbrüche von mehreren Kraftfahrzeugen; Anpassen der Größe des ersten Teilmessbereiches mit einem zweiten Korrekturfaktor, um die Anzahl an Abbrüchen zu reduzieren. Durch eine Reduzierung von Messabbrüchen durch eine zu große Anzahl an Geschwindigkeitsmesswerten kann die Detektionsrate von erfassten Fahrzeugen mit geringer Geschwindigkeit gesteigert werden, ohne das gleichzeitig die Detektionsrate von Fahrzeugen mit hoher Geschwindigkeit sinkt, da eine zu geringe Anzahl von Geschwindigkeitsmesswerten vorliegt. Hierdurch wird ebenfalls die Gerechtigkeit durch Gleichbehandlung von Geschwindigkeitsverstößen mit geringer Geschwindigkeit und hoher Geschwindigkeit gewährleistet. Weiterhin bevorzugt ist der Betrag des vorgegebenen Grenzwertes für die Streuung der ersten Messwerte kleiner oder gleich 3%.

In einer weiteren bevorzugten Ausführungsform ist der erste und/ oder zweite Sensor als Radarsensor und/ oder Lasersensor ausgebildet. Derartige Sensoren sind besonders geeignet, die Geschwindigkeit eines Kraftfahrzeuges zu messen.

In einer weiteren bevorzugten Ausführungsform weist der erste Teilmessbereich in Fahrtrichtung einen Anfangsbereich und einen Endbereich auf, wobei ein Abstand zwischen dem Endbereich des ersten Teilmessbereiches und der Fotolinie maximal eine durchschnittliche Länge eines Kraftfahrzeuges beträgt. Wenn der erste Teilmessbereich vor der Fotolinie endet, ist es bevorzugt vorgesehen, dass der Abstand zur Fotolinie derart gering ist, dass wenn ein Kraftfahrzeug im ersten Teilmessbereich angemessen wird, während oder nach dem Messvorgang kein anderes Fahrzeug zwischen dem ersten Teilmessbereich und der Fotolinie einscheren kann und somit beim Auslösen der Beweisaufnahme nicht das eingescherte Kraftfahrzeug fotografisch erfasst und den Messwerten des im ersten Teilmessbereich angemessenen Kraftfahrzeuges fälschlicherweise zugeordnet wird.

Es versteht sich, dass die eben beschriebenen Ausführungsformen in Alleinstellung oder in Kombination untereinander dargestellt werden können. Umfasst eine bevorzugte Ausführungsform eine "und/ oder"-Verknüpfung zwischen einem ersten Merkmal und einem zweiten Merkmal, so ist dies so zu lesen, dass die Ausführungsform sowohl das erste Merkmal als auch das zweite Merkmal und gemäß einer weiteren Ausführungsform entweder nur das erste Merkmal oder nur das zweite Merkmal aufweist.

Vorteilhafte Ausführungsbeispiele der vorliegenden Erfindung werden nachfolgend Bezug nehmend auf die Figuren näher erläutert. Es zeigt:
- Fig. 1: schematischer Aufbau eines ersten Ausführungsbeispiels einer Vorrichtung zur Durchführung eines Verfahrens zur Geschwindigkeitsmessung (nicht zur Erfindung gehörig);
- Fig.2: schematischer Aufbau eines zweiten Ausführungsbeispiels einer erfindungsgemäßen Vorrichtung zur Durchführung eines Verfahrens zur Geschwindigkeitsmessung;
- Fig.3: schematischer Aufbau eines dritten Ausführungsbeispiels einer erfindungsgemäßen Vorrichtung zur Durchführung eines Verfahrens zur Geschwindigkeitsmessung;
- Fig.4: schematischer Aufbau eines vierten Ausführungsbeispiels einer erfindungsgemäßen Vorrichtung zur Durchführung eines Verfahrens zur Geschwindigkeitsmessung;

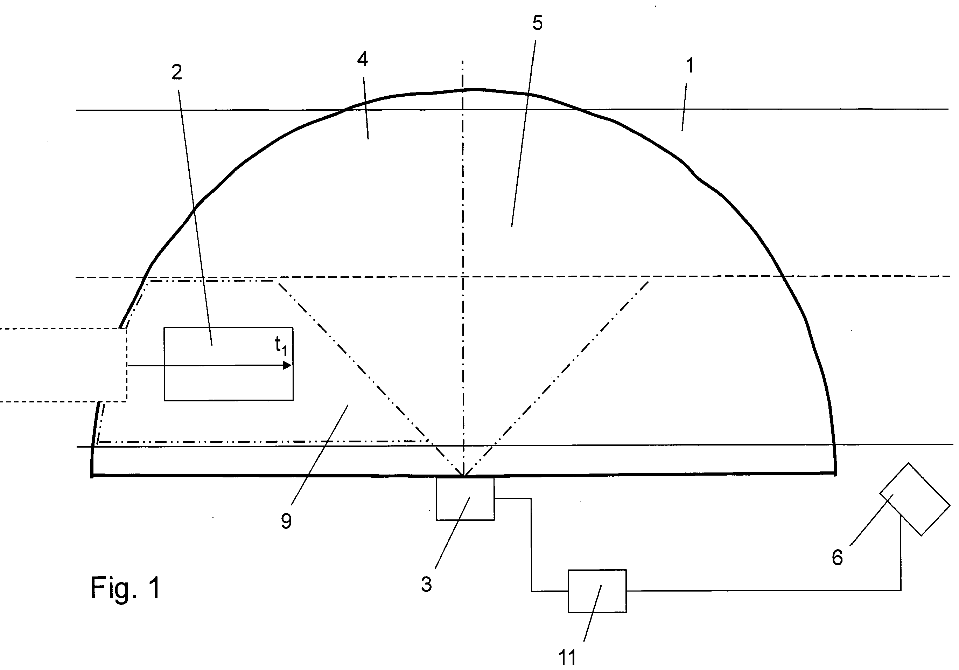

Fig. 1 zeigt einen schematischen Aufbau eines Ausführungsbeispiels einer Vorrichtung zur Durchführung eines Verfahrens zur Geschwindigkeitsmessung. Die Vorrichtung weist eine Sensoreinheit 3 zum Aussenden einer Messstrahlung 4 in einen, einen maximalen Messbereich bestimmenden Arbeitsbereich 5 und Empfangen der an einem Kraftfahrzeug 2 reflektierten Messstrahlung auf. Die Messstrahlung ist ein stark fokussierter gepulster Laserstrahl, der über einen rotierenden oder schwingenden Spiegel in einer horizontalen Scanebene mit einer konstanten Scanfrequenz und mit einer konstanten Pulsfrequenz abgelenkt wird und den Arbeitsbereich mehrfach abscannt. Für die Geschwindigkeitsmessung ist vorzugsweise ein Arbeitsbereich mit einem Aufweitungswinkel von α bis zu 180° geeignet. Die Mittelachse des Arbeitsbereiches steht bei einem Aufweitungswinkel von 180° vorzugsweise senkrecht zur Fahrrichtung. Dazu ist der Lasersensor (Laserscanner) neben der Fahrbahn 1 aufgestellt. Während des Scannens trifft der Laserstrahl auf im Arbeitsbereich befindliche Kraftfahrzeuge und wird reflektiert. Der jeweilige Auftreffpunkt wird durch einen Messpunkt Pₙ beschrieben. Die Laufzeit des gepulsten Laserstrahls zum angemessenen Kraftfahrzeug und zurück korreliert mit der zurückgelegten Wegstrecke, woraus eine Entfernung eₙ des Messpunktes Pₙ vom am Fahrbahnrand positionierten Lasersensor (Laserscanner) 3 abgeleitet und einem Zeitpunkt tₙ sowie einem momentanen Scanwinkel εₙ zugeordnet werden kann.

Alternativ kann auch ein Radarsensor eingesetzt werden, der eine Radarkeule abstrahlt, die einen Arbeitsbereich mit einem vergleichbaren Öffnungswinkel erfasst.

Mit den Messwerten für die momentane Entfernung, dem momentanen Winkel εₙ und dem Zeitpunkt tₙ werden die Messpunkte Pₙ mit zeitlicher Zuordnung in einem Polarkoordinatensystem beschrieben, das durch den Standort und die Ausrichtung des Lasersensors (Laserscanners) 3 bestimmt ist. Aus diesen Informationen kann nun eine Fahrtgeschwindigkeit des Kraftfahrzeuges abgeleitet werden. Der Arbeitsbereich 5 weist einen ersten Teilmessbereich 9 auf. Bei einem Radarsensor erfolgt dies auf gleiche Weise anhand der ersten Messwerte in Form von Dopplersignalen, die zu einem Messwert zu einem Zeitpunkt t1 zusammengefasst werden.

In dem Verfahren wird nun eine Anzahl von ersten Messwerten vorgegeben. Wenn durch die empfangene Messstrahlung in dem ersten Teilmessbereich 9 des Arbeitsbereiches erhaltenen ersten Messwerten die vorgegebene Anzahl von ersten Messwerten erreicht wird, wird das Erfassen von ersten Messwerten abgebrochen. Somit wird nicht der Messbereich vor der Messung festgelegt, sondern die Anzahl der Messwerte. Je nach der Fahrtgeschwindigkeit ergeben sich somit für den Messbereich verschiedene Größen. Insgesamt wird durch die Lösung die Gerechtigkeit durch Gleichbehandlung von Geschwindigkeitsverstößen mit geringer Geschwindigkeit und hoher Geschwindigkeit gewährleistet. Aus den erfassten ersten Messwerten wird eine Fahrtgeschwindigkeit des sich bewegenden Kraftfahrzeuges abgeleitet und diese mit einer Grenzgeschwindigkeit verglichen. Wenn dann die Fahrtgeschwindigkeit größer als die Grenzgeschwindigkeit ist, wird mittels einer Kamera 6 eine Beweisaufnahme aufgenommen. Dafür sind die Kamera 6 und die Sensoreinheit 3 über eine Rechner- und Steuereinheit 11 miteinander verbunden.

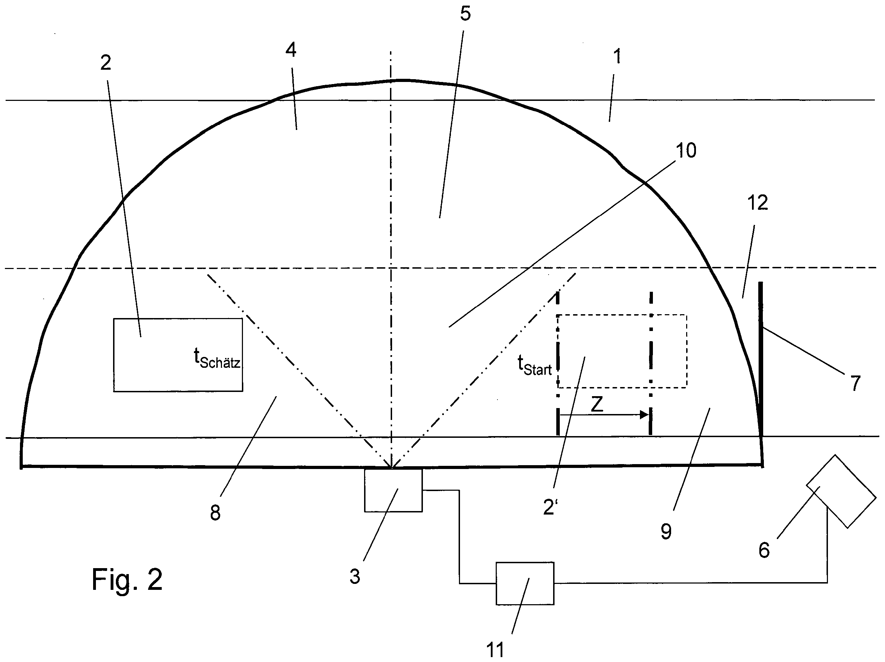

Fig.2 zeigt einen schematischen Aufbau eines Ausführungsbeispiels einer erfindungsgemäßen Vorrichtung zur Durchführung eines Verfahrens zur Geschwindigkeitsmessung. Die Vorrichtung und die Prinzipien der Messstrahlung und Messwerterfassung entsprechen im Wesentlichen denen in Fig. 1.

Im Unterschied zur Vorrichtung gemäß Fig. 1 weist der Arbeitsbereich 5 zumindest einen ersten Teilmessbereich 9 und einen zweiten Teilmessbereich 8 auf, wobei die Größe des ersten Teilmessbereiches zum Ableiten der Fahrtgeschwindigkeit in Abhängigkeit der in dem zweiten Teilmessbereich abgeleiteten Schätzgeschwindigkeit des Kraftfahrzeuges 2 gewählt wird.

Aus dem Vergleich der gesendeten Strahlung und der am Kraftfahrzeug 2 reflektierten Strahlung wird die Schätzgeschwindigkeit abgeleitet. Für die Ableitung der Schätzgeschwindigkeit werden nur einige wenige zweite Messwerte benötigt, die zu einem Messwert zu einem Zeitpunkt t_{Schätz} zusammengefasst werden. Dies erfolgt während der Einfahrt in den oder der Durchfahrt durch den Arbeitsbereich, bei der erfasst wird, wie sich die Kontur des Fahrzeuges im Arbeitsbereich über die Zeit verschiebt. Bei einem Radarsensor erfolgt dies auf gleiche Weise anhand der zweiten Messwerte in Form von Dopplersignalen, die zu einem Messwert zu einem Zeitpunkt t_{Schätz} zusammengefasst werden. Anhand der Schätzgeschwindigkeit des sich bewegenden Kraftfahrzeuges wird die Größe des Messbereiches, in dem die ersten Messwerte erfasst werden, bestimmt. Dies geschieht durch Festlegung des Zeitpunktes t_{Start}, an dem die Erfassung der ersten Messwerte beginnt. Durch den Pfeil Z ist die zeitliche Verschiebung des Beginns des ersten Teilmessbereiches für unterschiedliche Schätzgeschwindigkeiten dargestellt. Dies bedeutet, dass sich der Beginn des ersten Messbereiches in Fahrtrichtung verschiebt. Anschließend wird die Fahrtgeschwindigkeit mit einer Grenzgeschwindigkeit verglichen. Wenn die Fahrtgeschwindigkeit größer als die Grenzgeschwindigkeit ist, wird mittels einer Kamera 6 eine Beweisaufnahme ausgelöst, wenn sich das Kraftfahrzeug an einer vorgegebenen Fotolinie 7 befindet. Dafür sind die Kamera 6 und die Sensoreinheit 3 über eine Rechner- und Steuereinheit 11 miteinander verbunden.

Durch die Messung einer Schätzgeschwindigkeit des Kraftfahrzeuges in dem einfahrtsseitigen Teil des Arbeitsbereiches (zweiter Teilmessbereich 8) wird der erste Teilmessbereich 9 optimal an die Geschwindigkeit des Kraftfahrzeuges angepasst, also ein eher großer Messbereich für große Geschwindigkeiten und ein kleinerer Messbereich für kleine Geschwindigkeiten. Bevorzugt ist also der zweite Teilmessbereich 8 in einem einfahrtsseitigen Teil und der erste Teilmessbereich 9 in einem ausfahrtsseitigen Teil des Arbeitsbereiches 5 angeordnet.

Unter der Größe des Messbereiches ist erfindungsgemäß die Messlänge zu verstehen, die das Kraftfahrzeug 2 auf einer Fahrbahn 1 abfährt. Somit werden in dem maximalen Messbereich, also dem Arbeitsbereich 5, Teilmessbereiche definiert, in denen die Messwerte zur Ableitung einer Geschwindigkeit herangezogen werden, während in den anderen Bereichen des Arbeitsbereiches die Messwerte für die Bestimmung der Fahrtgeschwindigkeit ungenutzt bleiben.

Der erste Teilmessbereich endet unabhängig von der Schätzgeschwindigkeit an oder bis zu einer durchschnittlichen Fahrzeuglänge entfernt vor der Fotolinie 7. In der Praxis entsteht somit in Abhängigkeit der Schätzgeschwindigkeit eine Lücke 10 zwischen den beiden Teilmessbereichen, die umso kleiner ist, je höher die Schätzgeschwindigkeit ist.

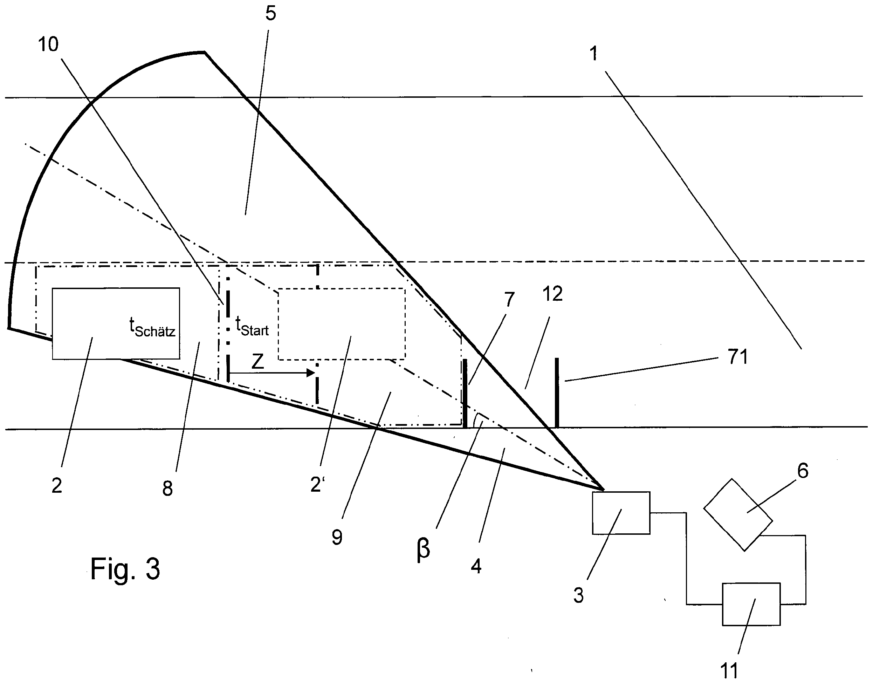

In der Fig. 3 ist ein zweites bevorzugtes Ausführungsbeispiel einer erfindungsgemäßen Vorrichtung zur Durchführung eines Verfahrens zur Geschwindigkeitsmessung gezeigt.

Die Vorrichtung weist eine Sensoreinheit 3 zum Aussenden einer Messstrahlung 4 in einen, einen maximalen Messbereich bestimmenden Arbeitsbereich 5 und Empfangen der an einem Kraftfahrzeug 2 reflektierten Messstrahlung auf. Die Messstrahlung ist ein stark fokussierter gepulster Laserstrahl, der über einen rotierenden oder schwingenden Spiegel in einer horizontalen Scanebene mit einer konstanten Scanfrequenz und mit einer konstanten Pulsfrequenz abgelenkt wird und den Arbeitsbereich mehrfach abscannt. Hierbei wird für die Geschwindigkeitsmessung ein Arbeitsbereich mit einem bevorzugten Aufweitungswinkel von 10°< α <60° eingesetzt. Die Mittelachse des Arbeitsbereiches ist dabei je nach Messsituation zwischen 15° und 40° entgegen der Fahrrichtung in einem spitzen horizontalen Winkel β in Richtung der Fahrbahn gedreht. Dazu kann der Lasersensor (Laserscanner) neben einer Fahrbahn 1 in einem spitzen Winkel zur Fahrbahn aufgestellt sein. Während des Scannens trifft der Laserstrahl auf im Arbeitsbereich 5 befindliche Kraftfahrzeuge und wird reflektiert. Der jeweilige Auftreffpunkt wird durch einen Messpunkt Pₙ beschrieben. Die Laufzeit des gepulsten Laserstrahls zum angemessenen Kraftfahrzeug und zurück korreliert mit der zurückgelegten Wegstrecke, woraus eine Entfernung eₙ des Messpunktes Pₙ vom am Fahrbahnrand positionierten Lasersensor (Laserscanner) 3 abgeleitet und einem Zeitpunkt tₙ sowie einem momentanen Scanwinkel εₙ zugeordnet werden kann.

Alternativ kann auch ein Radarsensor eingesetzt werden, der eine Radarkeule abstrahlt, die einen Arbeitsbereich mit einem vergleichbaren Öffnungswinkel erfasst.

Mit den Messwerten für die momentane Entfernung, dem momentanen Winkel εₙ und dem Zeitpunkt tₙ werden die Messpunkte Pₙ mit zeitlicher Zuordnung in einem Polarkoordinatensystem beschrieben, das durch den Standort und die Ausrichtung des Lasersensors (Laserscanners) 3 bestimmt ist. Aus diesen Informationen kann nun eine Geschwindigkeit des Kraftfahrzeuges abgeleitet werden. Erfindungsgemäß weist der Arbeitsbereich 5 zumindest einen ersten Teilmessbereich 8 und einen zweiten Teilmessbereich 9 auf, wobei die Größe des zweiten Teilmessbereiches zum Ableiten der Fahrtgeschwindigkeit in Abhängigkeit der in dem ersten Teilmessbereich abgeleiteten ersten Geschwindigkeit des Kraftfahrzeuges 2 gewählt wird.

Aus dem Vergleich der gesendeten Strahlung und der am Kraftfahrzeug reflektierten Strahlung wird die Schätzgeschwindigkeit abgeleitet. Für die Ableitung der Schätzgeschwindigkeit werden nur einige wenige zweite Messwerte benötigt, die zu einem Messwert zu einem Zeitpunkt t_{Schätz} zusammengefasst werden. Dies erfolgt während der Einfahrt in den oder der Durchfahrt durch den Arbeitsbereich, bei der erfasst wird, wie sich die Kontur des Fahrzeuges 2 im Arbeitsbereich über die Zeit verschiebt. Bei einem Radarsensor erfolgt dies auf gleiche Weise anhand der zweiten Messwerte in Form von Dopplersignalen, die zu einem Messwert zu einem Zeitpunkt t_{Schätz} zusammengefasst werden. Anhand der Schätzgeschwindigkeit des sich bewegenden Kraftfahrzeuges wird die Größe des Messbereiches, in dem die ersten Messwerte erfasst werden, aus denen die Fahrtgeschwindigkeit des gleichen Fahrzeuges 2' zu einem Zeitpunkt t_{Start} bestimmt wird, festgelegt. Durch den Pfeil Z ist die Verschiebung des Beginns des ersten Teilmessbereiches dargestellt, je weiter sich der Beginn des ersten Messbereiches in Fahrtrichtung verschiebt, umso kleiner wird der erste Messbereich. Anschließend wird die Fahrtgeschwindigkeit mit einer Grenzgeschwindigkeit verglichen, wenn die Fahrtgeschwindigkeit größer als die Grenzgeschwindigkeit ist, wird mittels einer Kamera 6 eine Beweisaufnahme ausgelöst, wenn sich das Kraftfahrzeug an einer vorgegebenen Fotolinie 7 befindet. Dafür sind die Kamera 6 und die Sensoreinheit 3 über eine Rechner- und Steuereinheit 11 miteinander verbunden.

Durch die Messung einer Schätzgeschwindigkeit des Kraftfahrzeuges in dem einfahrtsseitigen Teil des Arbeitsbereiches (zweiter Teilmessbereich 8) wird der erste Teilmessbereich 9 optimal an die Geschwindigkeit des Kraftfahrzeuges angepasst, also ein eher großer Messbereich für große Geschwindigkeiten und ein kleinerer Messbereich für kleine Geschwindigkeiten. Bevorzugt ist also der zweite Teilmessbereich 8 in einem einfahrtsseitigen Teil und der erste Teilmessbereich 9 in einem ausfahrtsseitigen Teil des Arbeitsbereiches 5 angeordnet.

Bevorzugt ist somit der zweite Teilmessbereich kleiner ausgebildet als der Bereich, der maximal für den ersten Teilmessbereich zur Verfügung steht. Der zweite Teilmessbereich 8 ist bevorzugt nur so groß, dass für alle Kraftfahrzeuge mit einer maximal vorgesehen Geschwindigkeit z.B. bis 300 km/h eine Schätzgeschwindigkeit bestimmt werden kann. Dem ersten Teilmessbereich stehen dann maximal der Bereich zwischen dem ersten Teilmessbereich und der Fotolinie zur Verfügung, wenn die Fotolinie 7 innerhalb des Arbeitsbereiches 5 angeordnet ist und maximal der Bereich zwischen dem zweiten Teilmessbereich und dem Rand des ausfahrtseitigen Teil des Arbeitsbereiches 5. Der erste Teilmessbereich endet unabhängig von der Schätzgeschwindigkeit an der Fotolinie 7 oder bis zu einer durchschnittlichen Fahrzeuglänge entfernt vor der Fotolinie 71. In der Praxis entsteht somit in Abhängigkeit der Schätzgeschwindigkeit eine Lücke 10 zwischen den beiden Teilmessbereichen, die umso kleiner ist, je höher die Schätzgeschwindigkeit ist. In einer ersten Ausführungsform kommt die Fotolinie 7, in einer zweiten Ausführungsform kommt die Fotolinie 71 zum Einsatz.

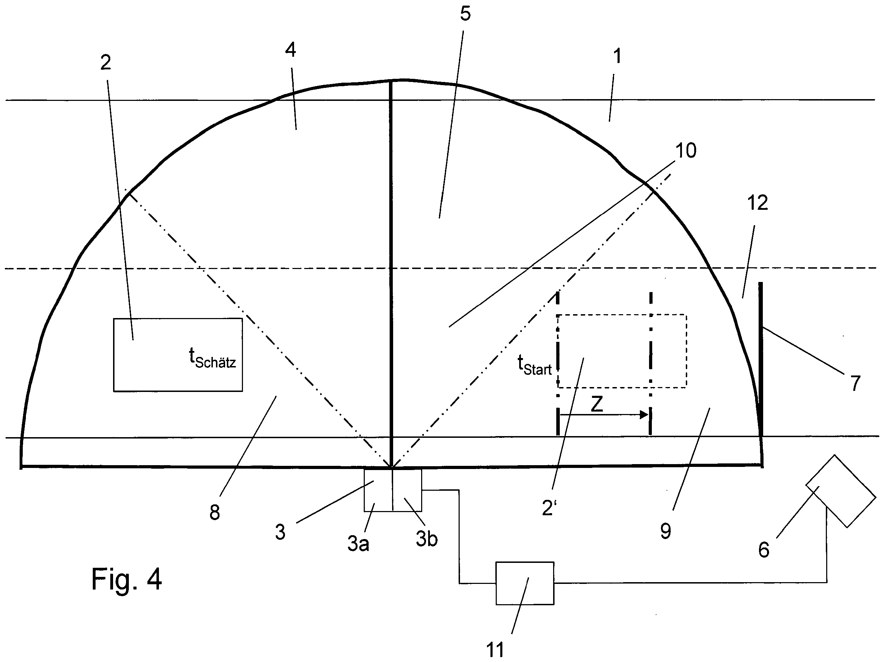

In der Fig. 4 ist abschließend ein drittes Ausführungsbeispiel einer erfindungsgemäßen Vorrichtung zur Durchführung eines Verfahrens zur Geschwindigkeitsmessung gezeigt.

Das Ausführungsbeispiel gemäß Fig. 4 unterscheidet sich von den ersten zwei Ausführungsbeispielen durch die Ausbildung der Sensoreinheit 3. In diesem Ausführungsbeispiel umfasst die Sensoreinheit einen ersten Sensor 3a und einen zweiten Sensor 3b. Hierbei wird jeweils ein Sensor einem Teilmessbereich 8 zugeordnet. Bevorzugt ist vorgesehen, dass der erste Sensor 3a dem zweiten Teilmessbereich und der zweite Sensor 3b dem ersten Teilmessbereich 9 zugeordnet ist. Dabei kann vorgesehen sein, dass der zweite Sensor 3b für den ersten Messbereich in dem die Fahrtgeschwindigkeit ermittelt wird eine höhere Messgenauigkeit besitzt, als der erste Sensor 3a. Hierdurch kann der erste Sensor 3a kostengünstiger ausgeführt werden, als der zweite Sensor 3b.

Die beiden Sensoren können an einem Ort und/ oder in einer Baueinheit zusammengeführt sein oder an verschiedenen Orten aufgestellt sein. Beispielsweise kann es sich bei den beiden unabhängigen Sensoren um Sensoren gleicher Art, insbesondere Laserscanner oder Radarsensoren handeln. Der erste Sensor 3a kann aber auch ein beliebig anderer aktiver oder passiver wellenstrahlbasierter Sensor sein, der z.B. mit Laserstrahlen, Radarstrahlen oder Schallwellen arbeitet.

In der Fig. 4 ist auch ein Abstand 12 zwischen einem Endbereich des ersten Teilmessbereiches und der Fotolinie 7 eingezeichnet. Dieser Abstand wird erfindungsgemäß relativ klein gewählt, im Idealfall null bis maximal einer durchschnittlichen Fahrzeuglänge, so dass kein weiteres zweites Kraftfahrzeug fälschlicherweise den Messwerten des im ersten Teilmessbereiches angemessenen Kraftfahrzeuges zugeordnet wird.

Grundsätzlich können die Ausführungsbeispiele 1 und 2 wie in Figur 4 dargestellt mit je zwei Sensoren, ausgeführt werden.

## Patentansprüche

1. Verfahren zur Geschwindigkeitsmessung eines sich auf einer Fahrbahn (1) bewegenden Kraftfahrzeuges (2) mit folgenden Schritten:
a) Bereitstellen einer Sensoreinheit (3) zum Aussenden einer Messstrahlung (4) in einen einen maximalen Messbereich bestimmenden Arbeitsbereich (5) und Empfangen einer an dem Kraftfahrzeug reflektierten Messstrahlung;
b) Vorgeben einer Anzahl von ersten Messwerten;
c) Erfassen von durch die empfangene Messstrahlung in einem ersten Teilmessbereich (9) des Arbeitsbereiches erhaltenen ersten Messwerten;
d) Abbrechen des Erfassens an ersten Messwerten gemäß Schritt c), wenn die vorgegebene Anzahl an Messwerten gemäß Schritt b) erreicht wird.
e) Ableiten einer Fahrtgeschwindigkeit des sich bewegenden Kraftfahrzeuges aus durch die empfangene Messstrahlung in dem ersten Teilmessbereich (9) des Arbeitsbereiches erhaltenen ersten Messwerten;
f) Vergleichen der Fahrtgeschwindigkeit mit einer Grenzgeschwindigkeit;
g) Aufnehmen einer Beweisaufnahme mittels einer Kamera (6), falls die Fahrtgeschwindigkeit größer als die Grenzgeschwindigkeit ist, **dadurch gekennzeichnet, dass** eine Schätzgeschwindigkeit zu einem Zeitpunkt t_{Schätz} des sich bewegenden Kraftfahrzeuges aus durch die empfangene Messstrahlung in einem zweiten Teilmessbereich (8) des Arbeitsbereiches erhaltenen zweiten Messwerten abgeleitet wird und dass das Erfassen gemäß Schritt c) zu einem Zeitpunkt tₛₜₐᵣₜ begonnen wird, wobei der Zeitpunkt t_{Start} so anhand der Schätzgeschwindigkeit bestimmt wird, dass das Abbrechen gemäß Schritt d) vor einer Fotolinie (7) erfolgt.

2. Verfahren gemäß Patentanspruch 1, **dadurch gekennzeichnet, dass** der Schritt g) des Aufnehmens dann erfolgt, wenn sich das Kraftfahrzeug an der vorgegebenen Fotolinie (7) befindet.

3. Verfahren gemäß Anspruch 1 oder 2, **dadurch gekennzeichnet, dass** die Sensoreinheit (3) einen ersten Sensor (3b) zum Ableiten der Fahrtgeschwindigkeit und einen zweiten Sensor (3a) zum Ableiten der Schätzgeschwindigkeit umfasst.

4. Verfahren gemäß einem der vorhergehenden Ansprüche, **dadurch gekennzeichnet, dass** der zweite Teilmessbereich (8) kleiner ausgebildet ist als der erste Teilmessbereich (9).

5. Verfahren gemäß einem der vorhergehenden Ansprüche, **dadurch gekennzeichnet, dass** der erste und/oder zweite Sensor als Radarsensor oder Lasersensor ausgebildet ist.

## Claims

1. Method for measuring the speed of a motor vehicle (2) moving along a road (1), comprising the following steps:
a) providing a sensor unit (3) for emitting a measurement radiation (4) into a working region (5) that determines a maximum measuring area, and receiving measurement radiation reflected at the motor vehicle;
b) specifying a number of first measured values;
c) detecting first measured values obtained via the received measurement radiation in a first partial measurement area (9) of the working region;
d) terminating the detection of first measured values according to step c) if the prespecified number of measured values according to step b) is reached;
e) deriving a driving speed of the moving motor vehicle from first measured values obtained via the received measurement radiation in the first partial measurement area (9) of the working region;
f) comparing the driving speed with a speed limit;
g) acquiring an evidential recording by means of a camera (6) in the event that the driving speed is greater than the speed limit, **characterized in that** an estimated speed of the moving motor vehicle at a point in time tₑₛₜᵢₘₐₜₑ is derived from second measured values obtained via the received measuring radiation in a second partial measurement area (8) of the working region, and **in that** the detection according to step c) is started at a point in time tₛₜₐᵣₜ, wherein the time tₛₜₐᵣₜ is determined using the estimated speed in such a way that the termination in accordance with step d) takes place before a photography line (7).

2. Method according to Claim 1, **characterized in that** the step g) of acquisition takes place when the motor vehicle is located at the prespecified photography line (7).

3. Method according to Claims 1 or 2, **characterized in that** the sensor unit (3) comprises a first sensor (3b) for deriving the driving speed and a second sensor (3a) for deriving the estimated speed.

4. Method according to any one of the preceding claims, **characterized in that** the second partial measurement area (8) is smaller than the first partial measurement area (9).

5. Method according to any one of the preceding claims, **characterized in that** the first and/or second sensor is designed as a radar sensor or laser sensor.

## Revendications

1. Procédé de mesure de la vitesse d'un véhicule automobile (2) se déplaçant sur une route (1) comprenant les étapes suivantes :
a) préparation d'une unité de capteur (3) pour émettre un rayonnement de mesure (4) dans une plage de travail (5) déterminant une plage de mesure maximale et pour recevoir un rayonnement de mesure réfléchi par le véhicule automobile ;
b) spécification d'un nombre de premières valeurs de mesure ;
c) acquisition de premières valeurs de mesure obtenues par le rayonnement de mesure reçu dans une première plage mesure partielle (9) de la plage de travail ;
d) interruption de l'acquisition des premières valeurs de mesure selon l'étape c), lorsque le nombre spécifié de valeurs de mesure selon l'étape b) a été atteint ;
e) déduction d'une vitesse de déplacement du véhicule automobile se déplaçant à partir des premières valeurs de mesure obtenues par le rayonnement de mesure reçu dans la première plage de mesure partielle (9) de la plage de travail ;
f) comparaison de la vitesse de déplacement à une vitesse seuil ;
g) enregistrement d'une preuve au moyen d'une caméra (6), si la vitesse de déplacement est supérieure à la vitesse seuil, **caractérisé en ce qu'une** vitesse estimée à un instant tₑₛₜᵢₘₐₜᵢₒₙ du véhicule automobile se déplaçant est déduite à partir de secondes valeurs de mesure obtenues par le rayonnement de mesure reçu dans une seconde plage de mesure partielle (8) de la plage de travail et **en ce que** l'acquisition selon l'étape c) est débutée à un instant t_{début}, l'instant t_{début} étant déterminé à l'aide de la vitesse estimée de sorte que l'interruption selon l'étape d) s'effectue avant une ligne de photographie (7).

2. Procédé selon la revendication 1, **caractérisé en ce que** l'étape g) d'enregistrement est effectuée lorsque le véhicule se trouve au niveau de la ligne de photographie spécifiée (7).

3. Procédé selon la revendication 1 ou 2, **caractérisé en ce que** l'unité de capteur (3) comprend un premier capteur (3b) pour déduire la vitesse de déplacement et un second capteur (3a) pour déduire la vitesse estimée.

4. Procédé selon l'une quelconque des revendications précédentes, **caractérisé en ce que** la seconde plage de mesure partielle (8) est conçue plus petite que la première plage de mesure partielle (9).

5. Procédé selon l'une quelconque des revendications précédentes, **caractérisé en ce que** le premier et/ou le second capteur est conçu comme un capteur radar ou un capteur laser.
